Europäisches Patentamt

European Patent Office

Office européen des brevets

(11) Veröffentlichungsnummer: **0 281 934 B1**

# EUROPÄISCHE PATENTSCHRIFT

(45) Veröffentlichungstag der Patentschrift: **12.02.92**

(21) Anmeldenummer: **88103244.5**

(22) Anmeldetag: **03.03.88**

(51) Int. Cl.⁵: **B23Q 3/06**

(54) **Mechanischer Kraftverstärker.**

(30) Priorität: **12.03.87 DE 3708021**

(43) Veröffentlichungstag der Anmeldung:
**14.09.88 Patentblatt 88/37**

(45) Bekanntmachung des Hinweises auf die
Patenterteilung:
**12.02.92 Patentblatt 92/07**

(84) Benannte Vertragsstaaten:
**CH DE ES FR GB IT LI SE**

(56) Entgegenhaltungen:
**DE-C- 876 789**
**FR-A- 2 308 982**
**GB-A- 1 155 804**
**US-A- 3 451 314**

(73) Patentinhaber: **Saurer-Allma GmbH**
**Leonhardstrasse 19**
**W-8960 Kempten(DE)**

(72) Erfinder: **Krause, Ludwig, Dipl.-Ing. FH**
**Buchen am Wald Nr. 2**
**W-8966 Altusried(DE)**

(74) Vertreter: **Pfister, Helmut, Dipl.-Ing.**
**Buxacher Strasse 9**
**W-8940 Memmingen/Bayern(DE)**

## Beschreibung

Die Erfindung betrifft einen mechanischen Kraftverstärker mit einem einen Keil aufweisenden Primärglied, das auf Druckwalzen einwirkt, die sich je an zwei Gegenflächen abstützen, die zusammen einen sich verengenden Spalt bilden, wobei die eine Gegenfläche Teil eines die verstärkte Kraft weiterleitenden Sekundärgliedes ist und wobei der Keil, die Druckwalzen und die Gegenflächen in einem zylindrischen Gehäuse angeordnet sind.

Die US-A 34 51 314 zeigt einen mechanischen Kraftverstärker dieser Art, der in ein Spannfutter eingebaut ist. Um die Mittelachse des Futters sind dabei drei Druckwalzen gleichmäßig verteilt angeordnet. Die einzelnen Druckwalzen bestehen aus einem Mittelzapfen, der drei Ringe trägt. Der mittlere Ring besitzt dabei einen größeren Außendurchmesser als die Außenringe. Durch Abstufungen der Gegenfläche wird erreicht, daß der mittlere Ring an der einen Gegenfläche und die äußeren Ringe an der gegenüberliegenden Gegenfläche anliegen. Die antreibende Keilfläche ist gewölbt.

Mit einer Anordnung dieser Art ist die Höhe der übertragbaren Kräfte während der Druckwalzenausbildung begrenzt.

Ein mechanischer Kraftverstärker wie vorstehend angegeben, ist beispielsweise beschrieben in der GB-PS 614905. Dabei ist ein Druckwalzenpaar vorgesehen und jede Druckwalze dieses Druckwalzenpaars wird von dem keilförmigen Primärglied in einen Spalt hineingedrückt, der von je zwei weiteren Druckwalzen gebildet ist. Die konvexen Oberflächen dieser weiteren Druckwalzen bilden dabei den sich verengenden Spalt.

Bei einer besonderen Ausführungsform dieses Kraftverstärkers ist dabei auch vorgesehen, daß der Keil des Primärgliedes zwei Druckwalzenpaare bewegt, die in den Spalt eingedrückt werden.

Von Vorteil ist bei diesem bekannten Kraftverstärker, daß sowohl die Druckwalzen, als auch die Gegenflächen von handelsüblichen Wälzkörpern gebildet sein können, so daß diese Teile bei Verschleiß leicht ausgewechselt werden können. Von Nachteil ist jedoch, daß das Übersetzungsverhältnis, das im Kraftverstärker zustande kommt, wegen der besonderen Spaltform nicht konstant ist, sondern stark progressiv gestaltet ist. Dies schließt die Gefahr in sich, daß es zu einer Selbsthemmung kommt, und daß die Druckwalzen bei der Entlastung dem Primärglied nicht folgen.

Die Anordnung von drei oder vier Walzenpaaren hat weiter den Nachteil, daß die Baulänge in Arbeitsrichtung zunimmt. Dies ist unerwünscht. Kraftverstärker der in Rede stehenden Art werden vorzugsweise in Maschinenschraubstöcken, aber auch der anderen, ähnlichen Spanneinrichtungen, beispielsweise für Werkzeugmaschinen benützt, bei denen es auch auf möglichst geringe Außenabmessungen der einzelnen Bauteile ankommt.

Ein anderer Kraftverstärker ist in der DE-PS 2844265 beschrieben. Bei diesem Kraftverstärker wirkt das keilartige Primärglied auf zwei Walzenpaare, die in einem sich verengenden Spalt angeordnet sind. Diese Bauweise hat den Vorteil, daß sich das Übersetzungsverhältnis nicht ändert, weil die Gegenflächen der Wälzkörper eben sind und in jeder Spannstellung die geometrischen Verhältnisse ähnlich sind. Die zwei Walzenpaare, die sich aufeinander abwälzen und in geringem Umfang auch aufeinander gleiten, bedingen jedoch einen verhältnismäßig langen Keil. Dadurch und durch die Anordnung von zwei Walzenpaaren ergibt sich eine nicht unbeträchtliche Baulänge, was unerwünscht ist.

In dem DE-U-8003004 ist ein mechanischer Kraftverstärker beschrieben, bei dem zwischen zwei Scheiben mit konischen Flächen eine größere Zahl von Kugeln angeordnet sind, die durch ein Primärglied mit einer konischen Druckfläche in den Spalt zwischen die konischen Gegenflächen hineingedrückt werden. Die Anordnung ist dabei derart getroffen, daß die Kugeln nicht nur radial nach außen gedrückt, sondern gleichzeitig auch gedreht werden.

Eine Bauweise mit sich drehenden kugelförmigen Druckkörpern führt aber zu einem erheblichen Verschließ in den Gegenflächen, der insbesondere auch dadurch bedingt ist, daß die Kugeln nur eine punktförmige Auflagefläche besitzen.

Eine ähnliche Anordnung bei der ebenfalls Kugeln als Druckkörper vorgesehen sind, ist in der DE-C-2741166 beschrieben. Durch eine größere Zahl von Kugeln, die auf einem vergleichsweise großen Durchmesser angeordnet werden, wird versucht, die spezifische Belastung der mit den Kugeln zusammenwirkenden Flächen zu reduzieren. Die Anordnung ist jedoch nur für verhältnismäßig kurze Krafthübe geeignet.

Es ist Aufgabe der Erfindung, einen Kraftverstärker der gattungsgemäßen Art dahingehend weiter zu entwickeln und zu verbessern, daß bei möglichst einfacher und wenig aufwendiger Bauweise eine proportionale Kraftverstärkung über den ganzen Arbeitshub erhalten wird, und daß insbesondere auch hohe Kräfte übertragen werden können, wie dies bei Maschinenschraubstöcken erforderlich ist.

Die Lösung gemäß der Erfindung ist dadurch gekennzeichnet, daß nur ein einziges Druckwalzenpaar vorgesehen ist und die zylindrischen, einstückigen Druckwalzen sich mit ihren Zylinderflächen unmittelbar an den im wesentlichen ebenen Gegenflächen und Keilflächen abstützen, wobei die Gegenflächen an auswechselbaren, in das Gehäuse eingelegten Scheiben gebildet sind.

Durch die Verwendung eines einzigen Druckwalzenpaares wird eine sehr geringe Baulänge erhalten. Darüber hinaus ist es bei einem einzigen Druckwalzenpaar auch möglich, den Innenraum des Gehäuses optimal auszunützen, d.h. die Druckwalzen im Durchmesser so groß zu gestalten, daß sie den Innenraum ausfüllen, wobei nur noch der erforderliche Platz für die Bewegung der Druckwalzen beim Krafthub gegeben ist. Große Druckwalzen geben aber vergleichsweise große Abstützflächen, die zwar theoretisch Linien sind, die aber unter der Wirkung der verformenden Kräfte sich streifenförmig verbreitern. Es ist klar, daß eine großflächige Abstützung eine wesentliche Voraussetzung für eine ausreichende Lebensdauer ist, zumal bei der Erfindung mit einer Gleitreibung wenigstens auf einem Teil der Flächen zu rechnen ist.

Die ebenen Gegenflächen, die die Erfindung vorsieht, sind einfach herstellbar. Dabei können beispielsweise zwei symmetrisch angeordnete Gegenflächen rechtwinklig zur Richtung des Krafthubes ausgerichtet sein, es können aber auch sämtliche Gegenflächen mit der Mittelachse des Kraftverstärkers einen mehr oder weniger spitzen Winkel einschließen. Auch die Anordnung stumpfer Winkel ist möglich, wenn die andere Gegenfläche entsprechend geneigt ist.

Bei der Erfindung läßt sich das Übersetzungsverhältnis in weiten Grenzen frei wählen. Während des ganzen Krafthubes bleibt das Übersetzungsverhältnis konstant, so daß auch die Spannkräfte, die beispielsweise durch einen Maschinenschraubstock erzeugt werden, auch in vorbestimmten Grenzen liegen.

Auf diese Weise wird auch sichergestellt, daß keine Selbsthemmung eintritt. Die Druckwalzen kehren bei Druckentlastung jeweils in ihre Ausgangsposition zurück. Bei extremen Übersetzungsverhältnissen kann es sich empfehlen, Einrichtungen, beispielsweise federnde Elemente vorzusehen, die die Rückkehr der Druckwalzen in die Ausgangsposition erleichtern bzw. sicherstellen.

Die Möglichkeit, bei der Erfindung handelsübliche Wälzkörper zu verwenden, reduziert weiter den Herstellungsaufwand.

Da die Gegenflächen an auswechselbaren, in das Gehäuse eingelegten Scheiben gebildet sind, erreicht die Erfindung, daß nicht nur die Druckwalzen als verschleißanfällige Teile auswechselbar sind, sondern daß auch die Gegenflächen bei Verschleiß schnell auswechselbar sind.

Auch können die Scheiben materialmäßig den auftretenden Beanspruchungen angepaßt werden.

Günstig ist es, wenn die beiden Scheiben als Ringscheiben ausgebildet sind. Die Ringgestalt, insbesondere auch für die Scheibe, die die Flächen trägt, die auf das Sekundärglied einwirken, erlaubt eine sehr gedrängte Bauweise. Das keilförmige Ende des Primärgliedes kann in die innere Ausnehmung dieser Scheibe eintauchen.

In der Regel werden bei der Erfindung ebene Keilflächen und ebene Gegenflächen verwirklicht. Eine solche Ausbildungsform ist herstellungsmäßig am einfachsten und sichert auch die Proportionalität, so daß unabhängig von der jeweiligen Stellung der einzelnen Elemente zueinander immer das gleiche Übersetzungsverhältnis erhalten wird.

In besonderen Fällen kann es gewünscht sein, daß diese Proportionalität in Grenzen verlassen wird, daß also eine zunächst geringere Übersetzung bzw. Kraftverstärker während des Hubes ansteigt. Dies läßt sich bei der Erfindung dadurch erreichen, daß beispielsweise die Keilflächen oder auch ein Teil der Gegenflächen oder alle Gegenflächen konvex ausgebildet werden.

Wenn es in speziellen Fällen gewünscht ist, daß die Kraftverstärkung im Laufe des Hubes geringer wird, läßt sich dies bei der Erfindung ebenfalls verwirklichen, indem sinngemäß konkave Flächen angewandt werden.

In der Zeichnung sind einige Ausführungsbeispiele der Erfindung schematisch dargestellt. Es zeigen:

Fig. 1    einen Längsschnitt durch einen erfindungsgemäßen Kraftverstärker,

Fig. 2    einen teilweisen Längsschnitt durch ein abgewandeltes Ausführungsbeispiel,

Fig. 3    eine Darstellung zur weiteren Erläuterung der Erfindung und

Fig. 4    eine Darstellung eines abgewandelten Ausführungsbeispiels der Erfindung.

In dem Gehäuse 12 ist eine zylindrische Ausnehmung 13 vorgesehen sowie eine zentrale Bohrung 14. In die Ausnehmung 13 ist die Ringscheibe 7 eingelegt, die die Gegenflächen 3 und 5 trägt sowie die Ringscheibe 8 mit den Gegenflächen 4 und 6. Die Gegenflächen 3 und 4 bzw. 5 und 6 sind jeweils einander zugewandt und begrenzen die sich radial nach außen verengenden Spalte 15 bzw. 16.

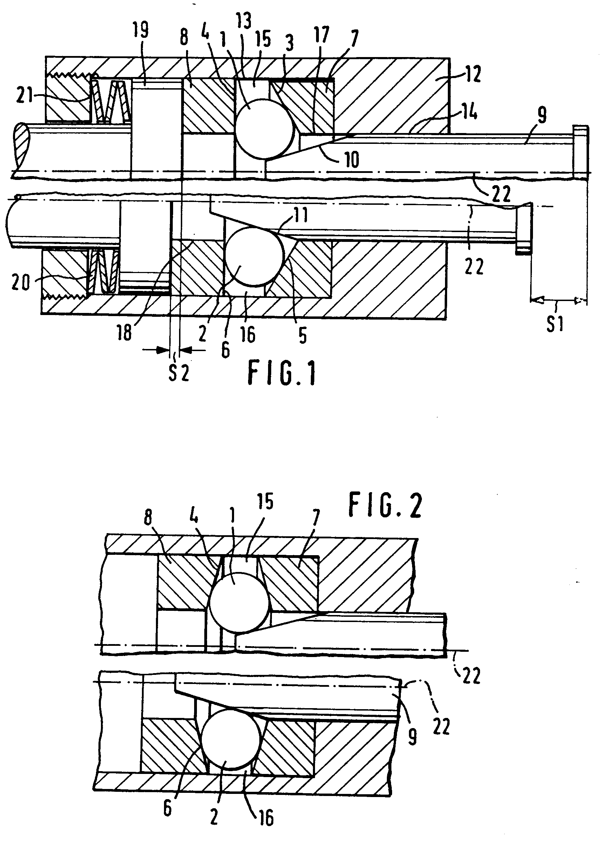

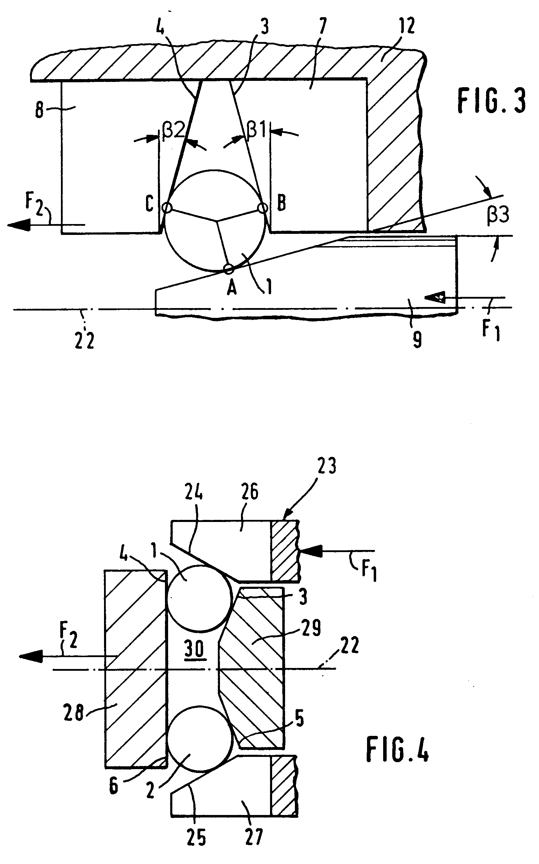

In diese Spalte sind Druckwalzen 1 bzw. 2 eingelegt. Die zentralen Ausnehmungen 17 bzw. 18 der Ringscheiben 7 bzw. 8 entsprechen ihrem Durchmesser vorzugsweise dem Durchmesser der Bohrung 14. An der Ringscheibe 8 liegt das Druckglied 19 an, das unter der Wirkung des Tellefederpakets 20 steht, das sich am Anschlag 21 des Gehäuses abstützt. In der Fig. 1 ist in der oberen Hälfte der Zeichnung diejenige Stellung des Primärgliedes 9 gezeigt, die dieses zu Beginn des Druckhubs einnimmt. Dieses Primärglied 9 ist wenigstens in demjenigen Teil, der in das Gehäuse 12 eintaucht als zylindrischer Bolzen gestaltet. Durch Abschrägungen sind die beiden Keilflächen 10 und 11 gebildet. Die Keilfläche 10 wirkt mit der Druckwalze 1 zusammen, die Keilfläche 11 mit der Druckwalze 2 . Es ist klar, daß bei der gezeigten Bauweise die Keilflächen 10 bzw. 11 eine halbelliptische Gestalt besitzen. Die Abnahme der Breite der wirksamen Keilfläche bei der Verschiebung des Primärgliedes in Richtung auf das als Sekundärglied wirkende Druckglied 19 ist jedoch ohne weiteren Nachteil.

Wird das bolzenförmige Primärglied 9 eingedrückt, werden die Druckwalzen 1 und 2 in die Spalte 15 bzw. 16 hineingepreßt und je nach der Winkelstellung der Gegenflächen 3 und 5 bzw. 4 und 6 ergibt sich die Verschiebung der Scheibe 8 und die Bewegung des Sekundärgliedes 19. Das Tellerfederpaket 20 sorgt dafür, daß beim Rückhub des Primärgliedes 9 die Ausgangslage wieder erreicht wird.

Im Ausführungsbeispiel nach der Fig. 1 sind die Gegenflächen 4 und 6 der Scheibe 8 rechtwinklig zur Mittelachse 22 ausgerichtet. Sie können also eine gemeinsame Ringfläche sein.

Im Ausführungsbeispiel nach der Fig. 2 sind die Gegenflächen 4 und 6 so gestaltet, daß sie zur Verengung des Spaltes 15 bzw. 16 mit beitragen.

Die geometrischen Verhältnisse ergeben sich aus der Darstellung der Fig. 3. Die Winkel $\beta$ 1 bzw. $\beta$ 2 als die Winkel der Gegenflächen zur Normalen auf der Mittelachse 22 können positiv sein. Es ist daher aber auch möglich, wie Fig. 1 zeigt, daß der Winkel $\beta$ 2 gleich null ist. Auch kann der Winkel $\beta$ 2 einen negativen Wert besitzen, wenn $\beta$ 1 ausreichend groß gewählt wird.

Die Normalkräfte an den Kontaktstellen A, B, C der Druckwalze 1 stehen miteinander im Gleichgewicht. Bei der Ausführungsform gem. Fig. 2 steht an der Stelle C die größte Kraft. Die Druckwalzen werden an dieser Stelle eine Wälzbewegung ausführen, an den Kontaktstellen B und C dagegen gleiten. Durch Veränderung der beiden Winkel $\beta$ 1 und $\beta$ 2 bzw. auch des Keilwinkels $\beta$ 3 läßt sich die Kräfteverteilung beeinflussen und insbesondere auch das jeweils gewünschte Übersetzungsverhältnis zwischen der Primärkraft F1 und der Sekundärkraft F 2 bestimmen. Die Wege S 1 und S 2 (Fig. 1) verhalten sich umgekehrt proportional zu den Kräften, wenn bei den Kräften die Reibungskräfte vernachlässigt werden.

In der Fig. 4 ist ein abgewandeltes Ausführungsbeispiel der Erfindung dargestellt. Dabei ist das Primärglied als gabelförmiges Element 23 ausgebildet und die beiden Teile 26 und 27 dieses gabelförmigen Elements 23 sind in einer nicht näher dargestellten Weise untereinander verbunden. Auf der Innenseite der Teile 26 und 27 befinden sich die Keilflächen 24 und 25, die auf die Druckwalzen 1 und 2 einwirken und diese beim Druckhub gegeneinander pressen. Die beiden Scheiben 28 und 29 begrenzen den sich zur Mittelachse 22 hin verengenden Spalt 30.

Eine ähnliche Anordnung wird erhalten, wenn das Element 23 ringförmig gestaltet wird und wenn die Keilflächen 24 und 25 auf der Innenseite eines solchen Ringes angebracht werden.

**Patentansprüche**

1. Mechanischer Kraftverstärker mit einem einen Keil aufweisenden Primärglied (9,23), das auf Druckwalzen (1,2) einwirkt, die sich je an zwei Gegenflächen (3,4,5,6) abstützen, die zusammen einen sich verengenden Spalt (15,16,30) bilden, wobei die eine Gegenfläche (4,6) Teil eines die verstärkte Kraft weiterleitenden Sekundärgliedes (19) ist, und wobei der Keil, die Druckwalzen und die Gegenflächen in einem zylindrischen Gehäuse (12) angeordnet sind, dadurch gekennzeichnet, daß nur ein einziges Druckwalzenpaar (1,2) vorgesehen ist und die zylindrischen, einstückigen Druckwalzen (1,2) sich mit ihren Zylinderflächen unmittelbar an den im wesentlichen ebenen Gegenflächen (3,4,5,6) und Keilflächen (10,11,24,25) abstützen, wobei die Gegenflächen (3,5; 4,6) an auswechselbaren, in das Gehäuse eingelegten Scheiben (7,8; 28,29) gebildet sind.

2. Kraftverstärker nach Anspruch 1, dadurch gekennzeichnet, daß die beiden Scheiben (7,8) als Ringscheiben ausgebildet sind und die inneren Ausnehmungen der Ringscheiben (7,8) dem Durchmesser des bolzenartigen Primärgliedes (9) angepaßt sind.

**Claims**

1. A mechanical servo unit comprising a primary element (9, 23) which has a wedge portion and which acts on pressure rollers 1, 2), each of which is supported on two counter surfaces (3, 4, 5, 6), said surfaces together forming an aperture (15, 16, 30) which narrows, with the one counter surface (4, 6) forming part of a secondary element (19) which passes on the amplified action, and with the wedge, the pressure rollers and the counter surfaces being arranged in a cylindrical housing (12), characterized in that only a single pair of pressure rollers (1, 2) is provided and said cylindrical, single-piece pressure rollers (1, 2) being supported with their cylinder surfaces directly on the substantially even counter surfaces (3, 4, 5, 6) and wedge surfaces (10, 11, 24, 25), with the counter surfaces (3,5; 4,6) being formed on replaceable discs (7,8; 28, 29) placed into the housing.

2. Servo unit according to claim 1, characterized in that the two discs (7, 8) are shaped as annular discs and the inner recesses of the annular discs (7, 8) correspond to the diameter of the bolt-type primary element (9).

**Revendications**

1. Amplificateur de force mécanique comprenant un élément primaire (9, 23), présentant un coin, qui agit sur des cylindres de pression (1, 2) s'appuyant, chacun, sur deux contre-faces (3, 4, 5, 6) dont l'ensemble forme un espacement (15, 16, 30) qui se rétrécit, dans lequel l'une (4, 6) des contre-faces fait partie d'un élément secondaire (19) transmettant la force amplifiée, et le coin, les cylindres de pression et les contre-faces se trouvent dans un boîtier cylindrique (12), caractérisé en ce qu'il n'est prévu qu'une seule paire de cylindres de pression (1, 2) et que les cylindres de pression (1, 2), d'une seule pièce, s'appuient, par leurs faces de cylindre, directement sur les contre-faces (3, 4, 5, 6) et les faces en coin (10, 11, 24, 25) sensiblement planes, les contre-faces (3, 5 ; 4, 6) étant formées sur des disques (7, 8 ; 29, 29) interchangeables se trouvant dans le boîtier.

2. Amplificateur de force suivant la revendication 1, caractérisé en ce que les deux disques (7, 8) se présentent sous forme de disques annulaires et que les évidements des disques annulaires (7, 8) sont adaptés au diamètre de l'élément primaire (9) en forme de cheville.

FIG.1

FIG.2

FIG.3

FIG.4